# FASCICULE DE BREVET EUROPEEN

(11) **EP 2 349 944 B1**
(45) Date de publication et mention de la délivrance du brevet: **17.05.2017**
(21) Numéro de dépôt: 09755994.2
(22) Date de dépôt: 08.10.2009
(51) Int. Cl.: C03C 25/26, C03C 25/34, C08G 16/02, C08G 8/28

(54) **PROCEDE DE FABRICATION DE PRODUITS D'ISOLATION A BASE DE LAINE MINERALE ET PRODUITS OBTENUS**
VERFAHREN ZUR HERSTELLUNG VON ISOLIERUNGSPRODUKTEN AUF BASIS VON MINERALWOLLE UND ERHALTENE PRODUKTE
PROCESS FOR MANUFACTURING INSULATION PRODUCTS BASED ON MINERAL WOOL, AND PRODUCTS OBTAINED

(30) Priorité: 08.10.2008 FR 0856812
(43) Date de publication de la demande: 03.08.2011
(73) Titulaire: Saint-Gobain Isover, 92400 Courbevoie (FR)
(72) Inventeur: JAFFRENNOU, Boris, F-75019 Paris (FR); DOUCE, Jérôme, F-75010 Paris (FR); MENIVAL, Hélène, F-60280 Margny-les-Compiegne (FR); PONS Y MOLL, Olivier, F-60600 Agnetz (FR)
(74) Mandataire: Saint-Gobain Recherche
(86) Numéro de dépôt international: PCT/FR2009/051923
(87) Numéro de publication internationale: WO 2010/040963

(56) Documents cités:
- WO-A-2007/143462
- JP-A- 2001 178 805
- US-A- 5 160 503
- US-A- 5 160 679
- US-A- 5 194 674
- US-A- 5 795 933
- US-B1- 6 194 512

## Description

L'invention se rapporte à un procédé de fabrication de produits d'isolation thermique et/ou acoustique à base de laine minérale liée par une composition d'encollage à base d'une résine thermodurcissable, en particulier de type résol, qui vise à limiter les émissions de formaldéhyde. Le procédé se caractérise en ce qu'il comprend une étape consistant à appliquer un agent apte à réagir avec le formaldéhyde choisi parmi les composés à méthylène(s) actif(s) sur le produit d'isolation, après que la résine thermodurcissable a réticulé.

L'invention concerne aussi les produits isolants à base de fibres minérales obtenus par ledit procédé de fabrication.

Les produits d'isolation à base de laine minérale peuvent être formés à partir de fibres obtenues par différents procédés, par exemple selon la technique connue du fibrage centrifuge interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Quant à la centrifugation externe, elle consiste à déverser la matière en fusion à la surface périphérique externe d'organes rotatifs appelés rotors, d'où ladite matière est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, à la sortie du dispositif centrifuge, une composition d'encollage contenant une résine thermodurcissable. La nappe de fibres revêtues de l'encollage est soumise à un traitement thermique (à une température généralement supérieure à 100°C) afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage est le plus souvent pulvérisée sur les fibres. De manière générale, la composition d'encollage renferme la résine (qui se présente habituellement sous la forme d'une solution aqueuse), des additifs tels que de l'urée, un ou plusieurs silanes, une huile minérale, de l'ammoniaque et un catalyseur de polycondensation, et de l'eau.

Les résines thermodurcissables les plus couramment utilisées sont des résines phénoliques appartenant à la famille des résols. Ces résines sont très solubles dans l'eau, possèdent une bonne affinité pour les fibres minérales, notamment en verre, permettent d'obtenir les propriétés d'élasticité et de reprise en épaisseur déjà mentionnées pour les produits d'isolation, et sont relativement peu coûteuses.

Les résols sont obtenus par condensation d'un composé phénolique et d'un aldéhyde, en présence d'un catalyseur basique dans un rapport molaire aldéhyde/composé phénolique supérieur à 1 et dans des conditions de réaction qui permettent d'avoir un taux minimal de composé phénolique libre. Ces résols contiennent généralement de l'aldéhyde libre en quantité qui dépend du rapport molaire aldéhyde/composé phénolique utilisé.

Les résols les plus couramment employés sont des condensats de phénol et de formaldéhyde. Un inconvénient de ces résols est lié notamment à la présence de formaldéhyde libre qui est susceptible d'être émis dans l'atmosphère lors de la fabrication du produit d'isolation sur la ligne de production et/ou par le produit d'isolation au cours du temps.

Pour palier cet inconvénient, il est connu d'ajouter dans le résol une quantité suffisante d'urée qui réagit avec le formaldéhyde libre en formant des condensats urée-formaldéhyde (voir EP 0 148 050 A1). La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement.

Cependant, il a été constaté que cette résine n'est pas stable dans les conditions de température auxquelles les fibres encollées sont soumises pour obtenir la réticulation du résol: les condensats urée-formaldéhyde sont dégradés et libèrent du formaldéhyde et de l'ammoniac, ce qui augmente la quantité de gaz indésirables à traiter avant leur rejet dans l'atmosphère.

Il a aussi été constaté que du formaldéhyde peut être libéré à partir du produit final lors de son utilisation en tant qu'isolant thermique et/ou acoustique sous l'effet des variations thermiques et hygrométriques liées aux cycles climatiques.

La demande JP 2001-178805 décrit l'utilisation d'un agent piégeur de formaldéhyde choisi parmi les composés contenant des groupes hydrazides, les composés contenant des groups amino ou imino et les urées modifiées.

La demande WO 2007/143462 décrit également l'utilisation d'agents aptes à réagir avec les formaldéhydes tels que l'urée, une résine mélanine à bas taux de formaldéhydes et le métabisulfite de sodium.

Depuis plusieurs années, la réglementation en matière d'émissions indésirables devient de plus en plus sévère et tend à limiter notamment la quantité de formaldéhyde pouvant être émis par un produit d'isolation thermique et/ou acoustique.

Des alternatives ont été proposées pour remplacer les résols par des résines ne faisant pas intervenir de formaldéhyde, par exemple des résines epoxy et des résines polyester, notamment obtenues par réaction d'alcool polyvinylique et d'un polyacide, ou d'un polyacide acrylique et d'un polyol. Cependant, ces résines sont très coûteuses. Mis à part les résines époxy, ces résines nécessitent en outre pour leur mise en oeuvre des installations spécifiques pouvant résister à la corrosion acide (le pH de ces résines est généralement inférieur 4, voire 3), ce qui entraîne un coût supplémentaire important.

La présente invention a pour but de proposer un procédé de fabrication d'un produit d'isolation thermique et/ou acoustique, à base de laine minérale encollée avec une résine thermodurcissable, en particulier de type résol, qui permet de limiter la quantité de formaldéhyde pouvant être émis par ledit produit d'isolation.

Un autre but de l'invention est de fournir un procédé qui n'affecte pas substantiellement la qualité des produits, notamment les propriétés d'isolation thermique et/ou acoustique et les propriétés mécaniques.

Un autre but de l'invention est de proposer un procédé qui répond aux exigences d'une fabrication industrielle, qui soit facile à mettre en oeuvre et ne requiert pas de modifications importantes de la ligne de production habituelle.

Pour atteindre ces buts, l'invention propose d'ajouter au procédé de production de laine minérale une étape qui consiste à appliquer une composition d'un agent apte à réagir avec le formaldéhyde choisi parmi les composés à méthylène(s) actif(s) sur le produit isolant, après que la résine thermodurcissable a réticulé.

Comme déjà indiqué, la fabrication de produits d'isolation thermique et/ou acoustique à base de laine minérale est connue (voir notamment EP-A-0 189 354 et EP-A-0 519 797).

De manière classique, une ligne de production de laine de verre par centrifugation interne comprend une série de dispositifs centrifugeurs. Les fibres qui s'en échappent sous l'effet de la force centrifuge sont traitées avec une composition d'encollage et ensuite collectées sur des organes de réception du type tapis aspirant, les fibres provenant de chaque dispositif centrifugeur se déposant en nappes successives sur le tapis qui les emmène ensuite dans une étuve pourvue de rouleaux de conformation. Le traitement thermique subi lors du passage dans l'étuve permet de sécher, réticuler et durcir la composition d'encollage. A la sortie de l'étuve, le produit d'isolation constitué de fibres liées par l'encollage réticulé est séché et généralement découpé aux dimensions souhaitées avant d'être emballé, par exemple sous la forme d'un ou plusieurs panneaux ou de rouleaux.

Le procédé conforme à la présente invention comprend une étape consistant à appliquer une composition d'un agent apte à réagir avec le formaldéhyde choisi parmi les composés à méthylène(s) actif(s) tels que définis dans la revendication 1 sur le produit d'isolation, après la réticulation du résol contenu dans la composition d'encollage.

Le traitement du produit d'isolation par la composition contenant ledit agent est effectué en aval du dispositif de traitement thermique, de type étuve, qui vise à obtenir la réticulation de la composition d'encollage.

Selon un mode de réalisation préféré de l'invention, particulièrement avantageux industriellement, l'application de la composition d'agent apte à réagir avec le formaldéhyde est effectuée en continu sur la ligne de production.

Bien que l'on préfère appliquer la composition de l'agent apte à réagir avec le formaldéhyde au plus tard sur le produit découpé, avant l'emballage, on ne saurait exclure que ladite composition puisse être appliquée en reprise sur le produit fini et ce, même si cela impose une étape supplémentaire de séchage à l'air libre ou par des moyens de chauffage appropriés pour éliminer l'eau et le(s) co-solvant(s) de la composition comme cela est expliqué plus loin.

De manière avantageuse, la composition contenant l'agent apte à réagir avec le formaldéhyde est appliquée juste à la sortie de l'étuve alors que le produit d'isolation est encore chaud, c'est-à-dire à une température de l'ordre de 50 à 80°C, de préférence 60 à 70°C. Cette façon de procéder est doublement avantageuse : elle permet de traiter le produit d'isolation uniquement en surface tout en permettant à l'agent apte à réagir avec le formaldéhyde de pénétrer dans le produit sur une épaisseur qui peut varier de quelques mm à quelques cm en fonction de la densité du produit ; elle permet un séchage efficace par élimination rapide de l'eau et de(s) co-solvant(s) en profitant de la chaleur contenue dans le produit d'isolation à la sortie de l'étuve.

L'application de la composition de l'agent apte à réagir avec le formaldéhyde peut se faire par tout moyen connu adapté pour l'application de liquides, notamment par pulvérisation et par enduction au rideau ou au rouleau.

L'application est effectuée sur la face supérieure du produit d'isolation sortant de l'étuve, et le cas échéant sur la face inférieure, avantageusement par pulvérisation sur la face supérieure et par enduction au rouleau sur la face inférieure.

La composition d'encollage utilisable dans le cadre de l'invention comprend une résine capable de réticuler sous l'effet de la chaleur, en particulier un résol du type phénol-formaldéhyde, de préférence un résol tel que décrit dans WO-A-99/03906 et WO-A-01/96254, ou un résol de type phénol-formaldéhyde-amine tel que décrit dans WO-A-2008/043960 et WO-A-2008/043961.

La composition d'encollage peut comprendre de l'urée en une quantité pouvant aller jusqu'à 50 parts d'urée pour 100 parts en poids sec du mélange constitué par la résine et l'urée.

De manière générale, la composition d'encollage comprend en outre les additifs ci-après dans les proportions pondérales suivantes, exprimées en parts pour 100 parts en poids sec de résine et le cas échéant d'urée :
- 0 à 10 parts d'un catalyseur de polycondensation, par exemple le sulfate d'ammonium, de préférence moins de 7 parts,
- 0 à 2 parts de silane, en particulier un aminosilane,
- 0 à 20 parts d'huile, de préférence 6 à 15 parts,
- 0 à 20 parts d'ammoniaque (solution à 20 % en poids), de préférence moins de 12 parts.

Le rôle des additifs est connu et brièvement rappelé : l'urée permet d'ajuster le temps de gel de la composition d'encollage afin d'éviter d'éventuels problèmes de prégélification ; le sulfate d'ammonium sert de catalyseur de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes ; l'ammoniaque joue, à froid, le rôle de retardateur de polycondensation.

La composition d'encollage est déposée sur les fibres minérales à raison de 2 à 15 % en poids sec du poids total des fibres, de préférence de 4 à 10 %, notamment de l'ordre de 5 %.

La température de réticulation de la composition d'encollage dans le dispositif de traitement thermique de type étuve est généralement comprise entre 75 et 300°C, de préférence 100 et 250°C.

L'agent apte à réagir avec le formaldéhyde est choisi parmi les composés à méthylène(s) actif(s) répondant aux formules suivantes :
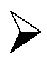 **FORMULA (I)** 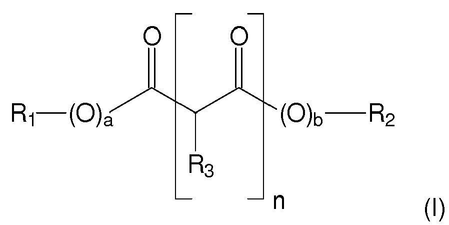 dans laquelle :
- R₁ et R₂, identiques ou différents, représentent un atome d'hydrogène, un radical alkyle en C₁-C₂₀, de préférence C₁-C₆, un radical amino ou un radical de formule 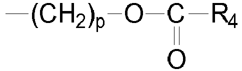 dans laquelle R₄ représente un radical 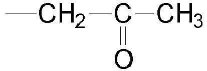 ou 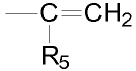 où R₅ = H ou -CH₃ et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2

Les composés de formule (I) préférés sont :
- la 2,4-pentanedione : R₁ = -CH₃ ; R₂ = -CH₃ ; R₃ = H ; a = 0 ; b = 0 ; n = 1
- la 2,4-hexanedione : R₁ = -CH₂-CH₃ ; R₂ = -CH₃ ; R₃ = H ; a = 0 ; b = 0 ; n = 1
- la 3,5-heptanedione R₁ = -CH₂-CH₃ ; R₂ = -CH₂-CH₃ ; R₃ = H ; a = 0 ; b = 0 ; n = 1
- la 2,4-octanedione : R₁ = -CH₃ ; R₂ = -(CH₂)₃-CH₃ ; R₃ = H ; a = 0 ; b = 0 ; n = 1
- l'acétoacétamide : R₁ = -CH₃ ; R₂ = -NH₂ ; R₃ = H ; a = 0 ; b = 0 ; n = 1
- le N-monométhylacétoacétamide : R₁ = -CH₃ ; R₂ = -NH(CH₃) ; R₃ = H ; a = 0 ; b = 0 ; n = 1
- le N-monoéthylacétoacétamide : R₁ = -CH₃ ; R₂ = -NH(CH₂-CH₃) ; R₃ = H ; a = 0 ; b = 0 ; n = 1
- le N,N-diméthylacétoacétamide : R₁ = -CH₃ ; R₂ = -N(CH₃)₂ ; R₃ = H ; a = 0 ; b = 0 ; n = 1
- le N,N-diéthylacétoacétamide : R₁ = -CH₃ ; R₂ = -N(CH₂-CH₃)₂ ; R₃ = H ; a = 0 ; b = 0 ; n = 1
- l'acide acétoacétique : R₁ = -CH₃ ; R₂ = H ; R₃ = H ; a = 0 ; b = 1 ; n = 1
- le méthylacétoacétate : R₁ = -CH₃ ; R₂ = -CH₃ ; R₃ = H ; a = 0 ; b = 1 ; n = 1
- l'éthylacétoacétate : R₁ = -CH₃ ; R₂ = -CH₂-CH₃ ; R₃ = H ; a = 0 ; b = 1 ; n = 1
- le n-propylacétoacétate : R₁ = -CH₃ ; R₂ = -(CH₂)₂-CH₃ ; R₃ = H ; a = 0 ; b = 1 ; n = 1
- l'iso-propylacétoacétate : R₁ = -CH₃ ; R₂ = -CH(CH₃)₂ ; R₃ = H ; a = 0 ; b = 1 ; n = 1
- l'iso-butylacétoacétate : R₁ = -CH₃ ; R₂ = -CH₂-CH(CH₃)₂ ; R₃ = H ; a = 0 ; b = 1 ; n = 1
- le t-butylacétoacétate : R₁ = -CH₃ ; R₂ = -C(CH₃)₃ ; R₃ = H ; a = 0 ; b = 1 ; n = 1
- le n-hexylacétoacétate : R₁ = -CH₃ ; R₂ = -(CH₂)₅-CH3 ; R₃ = H ; a = 0 ; b = 1 ; n = 1
- le malonamide : R₁ = -NH₂ ; R₂ = -NH₂ ; R₃ = H ; a = 0 ; b = 0 ; n = 1
- l'acide malonique : R₁ = H ; R₂ = H ; R₃ = H ; a = 1 ; b = 1 ; n = 1
- le diméthylmalonate : R₁ = -CH₃ ; R₂ = -CH₃ ; R₃ = H ; a = 1 ; b = 1 ; n = 1
- le diéthylmalonate : R₁ = -CH₂-CH₃ ; R₂ = -CH₂-CH₃ ; R₃ = H ; a = 1 ; b = 1 ; n = 1
- le di-n-propylmalonate : R₁ = -(CH₂)₂-CH₃ ; R₂ = -(CH₂)₂-CH₃ ; R₃ = H ; a = 1 ; b = 1 ; n = 1
- le di-iso-propylmalonate : R₁ = -CH(CH₃)₂ ; R₂ = -CH(CH₃)₂ ; R₃ = H ; a = 1 ; b = 1 ; n = 1
- le di-n-butylmalonate : R₁ = -(CH₂)₃-CH₃ ; R₂ = -(CH₂)₃-CH₃ ; R₃ = H ; a = 1 ; b = 1 ; n = 1
- l'acide acétonedicarboxylique : R₁ = H ; R₂ = H ; R₃ = H ; a = 1 ; b = 1 ; n = 2
- le diméthylacétonedicarboxylate : R₁ = -CH₃ ; R₂ = -CH₃ ; R₃ = H ; a = 1 ; b = 1 ; n = 2
- le 1,4-butanedioldiacétate R₁ = -CH₃ ; R₂ = -(CH₂)₄-O-CO-CH₂-CO-CH₃ ; R₃ = H ; a = 0 ; b = 1 ; n = 1
- le 1,6-hexanedioldiacétate R₁ = -CH₃ ; R₂ = -(CH₂)₆-O-CO-CH₂-CO-CH₃ ; R₃ = H ; a = 0 ; b = 1 ; n = 1
- le méthacryloxyéthylacétoacétate R₁ = -CH₃ ; R₂ = -(CH₂)₂-O-CO-C(CH₃)=CH₂ ; R₃ = H ; a = 0 ; b = 1 ; n = 1.
   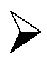 **FORMULE (II)**

   R₆-CHR₇-C≡N (II)

   dans laquelle
- R₆ représente un radical cyano ou un radical 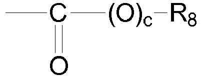 dans lequel :
   - R₈ représente un atome d'hydrogène, un radical alkyle en C₁-C₂₀, de préférence C₁-C₆, ou un radical amino
   - c est égal à 0 ou 1
- R₇ représente un atome d'hydrogène, un radical alkyle en C₁-C₁₀, un radical phényle ou un atome d'halogène.

Les composés de formule (II) préférés sont :
- le 2-méthylcyanoacétate : R₆ = -CO-O-CH₃ ; R₇ = H
- le 2-éthylcyanoacétate : R₆ = -CO-O-CH₂-CH₃ ; R₇ = H
- le 2-n-propylcyanoacétate : R₆ = -CO-O-(CH₂)₂-CH₃ ; R₇ = H
- le 2-iso-propylcyanoacétate : R₆ = -CO-O-CH(CH₃)₂ ; R₇ = H
- le 2-n-butylcyanoacétate : R₆ = -CO-O-(CH₂)₃CH₃ ; R₇ = H
- le 2-iso-butylcyanoacétate : R₆ = -CO-O-CH₂-CH(CH₃)₂ ; R₇ = H
- le 2-ter-butylcyanoacétate : R₆ = -CO-O-C(CH₃)₃ ; R₇ = H
- le 2-cyanoacétamide : R₆ = -CO-NH₂ ; R₅ = H
- le propanedinitrile : R₆ = -CΞN ; R₅ = H
   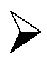 **FORMULE (III)** 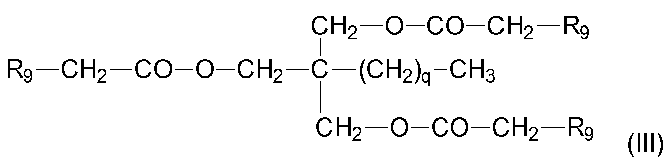 dans laquelle
   - R₉ représente un radical -C≡N ou -CO-CH₃
   - q est un nombre entier variant de 1 à 4.

Les composés de formule (III) préférés sont :
- le triméthylolpropane triacétoacétate : R₉ = -CO-CH₃ ; q = 1
- le triméthylolpropane tricyanoacétate : R₉ =-CΞN ; q = 1
   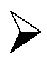 **FORMULE (IV)** 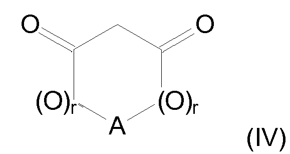 dans laquelle
   - A représente un radical -(CH₂)₃- ou -C(CH₃)₂-
   - r est égal à 0 ou 1

Les composés de formule (IV) préférés sont :
- la 1,3-cyclohexanedione : A = -(CH₂)₃ ; r = 0
- l'acide de Meldrum : A = -C(CH₃)₂- ; r = 1

La composition d'agent apte à réagir avec le formaldéhyde utilisable dans le cadre de l'invention comprend au moins un composé à méthylène(s) actif(s) répondant à l'une quelconque des formules (I) à (IV) précitées.

Comme déjà mentionné, la composition dudit agent est appliquée sous forme liquide sur le produit d'isolation après la réticulation de la composition d'encollage.

Selon un mode de réalisation préféré, la composition d'agent apte à réagir avec le formaldéhyde se présente sous la forme d'une solution, d'une dispersion ou d'une émulsion dans une phase liquide constituée majoritairement (à plus de 50 % en poids) d'eau et d'un ou plusieurs co-solvants organiques dudit agent, ces co-solvants ayant de préférence une toxicité et une inflammabilité faibles et avantageusement nulles. De préférence, la phase liquide contient 75 à 90 % en poids d'eau.

La teneur en agent apte à réagir avec le formaldéhyde représente 0,1 à 90 % en poids de la composition, de préférence 0,5 à 50 %, et mieux encore 1 à 20 %.

Selon un autre mode de réalisation applicable lorsque l'agent apte à réagir avec le formaldéhyde est liquide, on applique ledit agent directement sur le produit d'isolation, sans adjonction d'eau et d'éventuel(s) co-solvant(s). Par « liquide », on entend ici que ledit agent présente une viscosité inférieure à 0,3 Pa.s à 25°C. Ledit agent peut ainsi être mis en oeuvre tel quel à la température ambiante, voire après avoir été chauffé modérément pour qu'il devienne liquide et puisse être appliqué dans les conditions précitées. La température de chauffage doit être inférieure à la température de dégradation dudit agent.

L'agent apte à réagir avec le formaldéhyde est déposé sur le produit isolant en une quantité suffisante pour permettre la réaction avec le formaldéhyde libre présent dans la composition d'encollage et avec le formaldéhyde susceptible d'être émis ultérieurement dans les conditions d'utilisation, essentiellement sous l'action des cycles climatiques.

En règle générale, la composition d'agent apte à réagir avec le formaldéhyde est appliquée dans des conditions telles que la quantité (en poids sec) dudit agent varie de 0,01 à 50 g/m² de produit d'isolation final, de préférence de 0,1 à 10 g/m² et mieux encore de 0,2 à 5 g/m².

Le procédé selon l'invention s'applique à tout produit d'isolation contenant des fibres minérales liées entre elles par une résine réticulée, lequel produit peut présenter une épaisseur et une densité variables. Ce produit peut être notamment un voile, un mat ou un feutre et peut être pourvu sur une des faces d'un parement, par exemple de type papier kraft.

Les fibres minérales peuvent être constituées de verre ou de roche, et présenter une longueur et un diamètre qui varie en fonction de l'usage du produit d'isolation.

L'invention a également pour objet le dispositif pour mettre en oeuvre le procédé décrit plus haut.

Le dispositif comportant une ligne de production de laine minérale, notamment par centrifugation interne, comprenant une pluralité d'organes de fibrage en série, au moins un organe de réception/convoyage des fibres issues des organes de fibrage, un ou des organes d'application d'une composition d'encollage et un ou des organes de traitement thermique du type étuve, ce dispositif étant caractérisé en ce qu'il comprend en outre au moins une rampe de pulvérisation d'une composition d'un agent apte à réagir avec le formaldéhyde sur la face supérieure du produit d'isolation, en aval de l'(des) organe(s) de traitement thermique.

En vue de traiter le produit isolant par la composition de l'agent apte à réagir avec le formaldéhyde, le dispositif comporte une ou plusieurs rampes de pulvérisation placées au dessus de la face supérieure du produit d'isolation. De préférence, la ou les rampe(s) comporte(nt) un conduit d'amenée muni de buses de pulvérisation réparties régulièrement sur la longueur de la(des) rampe(s). Ces buses sont aptes à fournir des jets de liquide divergents de forme variée que l'homme du métier sait choisir en fonction de l'usage visé, de préférence des jets «plats » (non coniques). La configuration relative de la rampe et du produit à traiter est réglée de manière à ce que l'application de la composition d'agent apte à réagir avec le formaldéhyde soit régulière à la surface du produit, ce qui peut être obtenu en faisant en sorte que les jets de liquide se rejoignent au dessus ou sur le produit.

De manière avantageuse, la(les) rampe(s) de pulvérisation est(sont) disposée(s) à proximité du dispositif de traitement thermique de type étuve. De préférence, la première rampe fait face à un dispositif assurant le séchage dudit produit, avantageusement un dispositif d'aspiration situé au dessous de la face inférieure du produit d'isolation.

Le cas échéant, le dispositif peut comporter en outre un ou plusieurs rouleaux d'enduction permettant l'application de la composition d'agent apte à réagir avec le formaldéhyde sur la face inférieure du produit d'isolation, de préférence situé en aval de l'(des) organe(s) de traitement thermique et du dispositif assurant le séchage dudit produit.

L'invention a encore pour objet le produit d'isolation thermique et/ou acoustique obtenu par le procédé selon l'invention.

Le produit d'isolation comporte ainsi, en surface, un agent apte à réagir avec le formaldéhyde choisi parmi les composés de formules (I) à (IV) précitées.

Comme cela a déjà été précisé, la quantité (en poids sec) d'agent apte à réagir avec le formaldéhyde présente dans le produit d'isolation final varie de 0,01 à 50 g/m² de produit d'isolation final, de préférence de 0,1 à 10 g/m² et mieux encore de 0,2 à 5 g/m². Cette quantité est suffisante pour permettre la réaction avec le formaldéhyde susceptible d'être émis dans les conditions d'utilisation du produit d'isolation, essentiellement sous l'action des cycles climatiques.

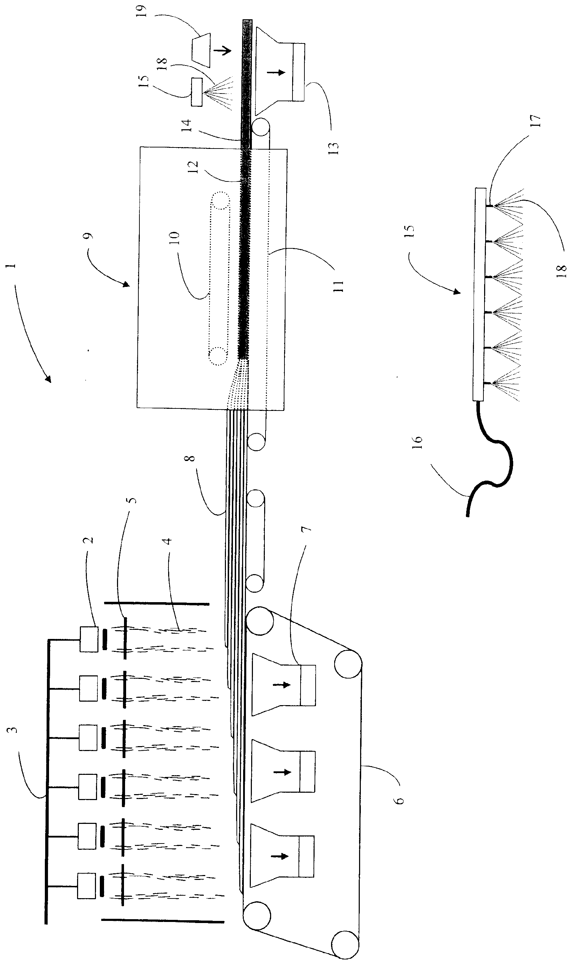

L'invention est décrite de manière plus détaillée dans la figure 1 qui représente une vue schématique d'une ligne de production de laine de verre par centrifugation interne.

Sur la figure 1, la ligne 1 comprend une pluralité de dispositifs de centrifugation interne 2 en série alimentés par du verre fondu par le conduit 3 venant d'un four de fusion des matières premières verrières (non représenté). Des fibres de verre 4 réparties sous la forme d'un tore sont éjectées à partir des dispositifs 2 et traitées par une composition d'encollage dispensée par des couronnes de pulvérisation 5. Les fibres encollées se déposent par gravité sur un dispositif de transport 6, par exemple un convoyeur à bande, muni de dispositifs d'aspiration 7 servant à maintenir les fibres, pour former une bande continue 8 qui est amenée jusqu'à une étuve 9 munie de dispositifs de conformation 10, 11 de la bande 8.

Dans l'étuve 9, la composition d'encollage réticule et lie les fibres, et le produit d'isolation 12 est mis aux dimensions souhaitées, notamment à l'épaisseur voulue. A la sortie de l'étuve, la bande continue de produit d'isolation 12 passe en dessous d'un dispositif de séchage 19 générant de l'air chaud (dans la direction indiquée par la flèche) et au dessus d'un dispositif d'aspiration 13 qui a pour fonction d'évacuer les gaz contenus dans le produit et d'accélérer le refroidissement du produit. Le dispositif de séchage 19 peut être choisi parmi les dispositifs connus de l'homme du métier, par exemple constitué d'au moins un brûleur à gaz et/ou d'au moins un générateur de microondes ou de rayonnement infrarouge.

La bande de produit est ensuite découpée en panneaux sensiblement parallélépipédiques qui sont conditionnés sous la forme de rouleaux ou de bandes, repliées ou non, puis emballés (moyens de découpe et d'emballage non représentés).

Conformément à l'invention, on ajoute à cette ligne de production traditionnelle une étape de traitement avec une composition d'un agent apte à réagir avec le formaldéhyde en phase aqueuse, sur la face supérieure 14 du produit d'isolation 12, et le cas échéant sur la face opposée (face inférieure), juste après la sortie de l'étuve 9.

Ce traitement se fait à l'aide d'une rampe de pulvérisation 15 alimentée en composition de l'agent apte à réagir avec le formaldéhyde, comportant un conduit 16 sur le trajet duquel sont réparties régulièrement des buses 17 (la rampe est représentée en vue de face agrandie au bas de la figure 1 pour plus de clarté). Les buses génèrent des jets divergents 18, de préférence plats, qui s'interpénètrent peu avant d'arriver au contact de la face supérieure 14 du produit d'isolation 12. Les conditions de mise en oeuvre des buses, notamment la quantité de liquide pulvérisé et la pression de pulvérisation, sont réglées de manière à ce que le produit soit imprégné par la composition d'agent apte à réagir avec le formaldéhyde sur une épaisseur allant de quelques millimètres à quelques centimètres. La rampe de pulvérisation 15 est disposée au dessus du produit 12 dans un plan sensiblement horizontal, à une distance qui peut aller jusqu'à 200 cm, de préférence environ 20 à 80 cm, de la face 14 et transversalement à l'axe de déplacement du produit 12, à l'aide d'un portique (non représenté). La rampe de pulvérisation est également disposée à proximité de la sortie de l'étuve, à une distance qui n'excède pas 500 cm, de préférence 200 cm, et avantageusement entre 30 à 100 cm, de préférence au dessus du dispositif d'aspiration 13 pour permettre la pénétration de l'agent apte à réagir avec le formaldéhyde dans l'épaisseur du produit d'isolation.

Les exemples qui suivent permettent d'illustrer l'invention sans toutefois la limiter.

Dans les exemples, on effectue les tests suivants :
- reprise d'épaisseur : le produit d'isolation est comprimé avec un taux de compression (défini comme étant le rapport de l'épaisseur nominale à l'épaisseur sous compression) égal à 8/1 pendant 1, 12, 30 et 90 jours. Sur le produit, après que la contrainte en compression est supprimée, on mesure l'épaisseur du produit d'isolation et on calcule la reprise d'épaisseur définie par le rapport de l'épaisseur du produit ayant été comprimé (au taux de compression précité) à l'épaisseur nominale. La mesure de reprise d'épaisseur, exprimée en %, permet d'évaluer la bonne tenue dimensionnelle du produit.
- résistance en traction : elle est mesurée selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).
- émissions de formaldéhyde venant du produit d'isolation : elles sont mesurées dans les conditions des normes ISO 16000 et EN 13419. La mesure du formaldéhyde émis est effectuée après 1 jour de test à une température de 23°C et sous une humidité relative de 50 %. La quantité de formaldéhyde est mesurée par chromatographie haute performance (HPLC) et réaction post-colonne dans les conditions de la norme ASTM D 5910-96 modifiées en ce que la phase mobile est de l'eau tamponnée à pH 6,8, que la température du four est égale à 90°C et que la détection est effectuée à 420 nm.

### EXEMPLE 1

On fabrique, dans la ligne de production décrite dans la figure 1, un produit d'isolation en laine de verre présentant une masse surfacique d'environ 850 g/m².

La composition d'encollage contient, en parts en poids :

| | |
|---|---|
| - résol phénol-formaldéhyde (exemple 2, essai 1 de WO 01/96254 A1) | 60 |
| - urée | 40 |
| - sulfate d'ammonium | 3 |
| - silane (Silquest^{®} A 1100 commercialisé par OSI) | 1 |
| - huile minérale | 9,5 |
| - ammoniaque | 1,2 |

La composition d'encollage est déposée sur les fibres à raison de 4,7 % en poids de matières sèches par rapport au produit d'isolation final. Les fibres encollées sont ensuite traitées dans une étuve à 260°C.

La composition d'agent apte à réagir avec le formaldéhyde est une solution aqueuse à 12 % en poids d'acétoacétamide (exemple 1a) ou de diméthylacétonedicarboxylate (exemple 1b). Cette composition est pulvérisée sur la face supérieure du produit d'isolation après l'étuve à raison de 20 g/m² (soit 2,4 g de matières sèches par m² de produit d'isolation). Le dispositif de séchage 19 est un brûleur à gaz qui génère de l'air chaud (110-150°C) sur la face supérieure 14 du produit d'isolation.

Le produit d'isolation traité par l'agent apte à réagir avec le formaldéhyde (exemples 1a et 1b) et non traité (Référence 1) est soumis au test d'émissions de formaldéhyde. Les mesures sont données dans le tableau 1.

### EXEMPLE 2

On procède dans les conditions de l'exemple 1 modifié en ce que la composition d'encollage contient un résol à faible teneur en formaldéhyde libre.

La composition d'encollage contient, en parts en poids :

| | |
|---|---|
| - résol phénol-formaldéhyde-monoéthanolamine (exemple 1 de WO-A-2008/043960) | 80 |
| - urée | 20 |
| - sulfate d'ammonium | 3 |
| - silane (Silquest^{®} A 1100 commercialisé par OSI) | 1 |
| - huile minérale | 9,5 |

La composition d'agent apte à réagir avec le formaldéhyde est une solution aqueuse à 12 % en poids d'acétoacétamide (exemples 2a et 2b) ou de diméthylacétonedicarboxylate (exemples 2c et 2d). Ces compositions sont pulvérisées sur la face supérieure du produit d'isolation après l'étuve à raison de 20 g/m² (soit 2,4 g de matières sèches par m² de produit d'isolation) et 10 g/m² (soit 1,2 g de matières sèches par m² de produit d'isolation), respectivement.

Le produit d'isolation traité par l'agent apte à réagir avec le formaldéhyde (exemples 2a à 2d) et non traité (Référence 2) est soumis au test d'émissions de formaldéhyde. Les mesures sont données dans le tableau 1.

**Tableau 1**

| | Agent apte à réagir avec le formaldéhyde | Quantité (g/m²) | Formaldéhyde émis (µg/m³) | Reprise d'épaisseur (%) | | | | Résistance en traction (gF/g) | | |
|---|---|---|---|---|---|---|---|---|---|---|
| | | | | 1 jour | 12 jours | 30 jours | 90 jours | initiale | Après vieillissement | Perte (%) |
| Ex. 1a | Acétoacétamide | 20 | < 5 | n. d. | n. d. | n. d. | n. d. | n. d. | n. d. | n. d. |
| Ex. 1b | Diméthylacéton e-dicarboxylate | 20 | 8 | 141,9 | 138,7 | 136,0 | 134,0 | 273,03 | 211,51 | 22,53 |
| Réf.1 | - | - | 45 | 141,3 | 141,3 | 138,8 | 134,7 | 265,38 | 203,64 | 23,26 |
| Ex. 2a | Acétoacétamide | 20 | < 5 | n. d. | n. d. | n. d. | n. d. | n. d. | n. d. | n. d. |
| Ex. 2b | Acétoacétamide | 10 | < 5 | n. d. | n. d. | n. d. | n. d. | n. d. | n. d. | n. d. |
| Ex. 2c | Diméthylacéton e-dicarboxylate | 20 | < 5 | 139,5 | n. d. | 132,7 | 129,4 | 227,13 | 201,69 | 11,20 |
| Ex. 2d | Diméthylacéton e-dicarboxylate | 10 | < 5 | 137,4 | n. d. | 127,9 | 127,8 | 211,37 | 201,07 | 4,80 |
| Réf. 2 | - | - | 12,5 | 135,4 | n. d. | 124,8 | 128,7 | 234,99 | 190,57 | 18,90 |

| | | | | | | | | | | |
|---|---|---|---|---|---|---|---|---|---|---|
| n. d. : non déterminé | | | | | | | | | | |

## Revendications

1. Procédé de fabrication d'un produit d'isolation thermique et/ou acoustique, à base de laine minérale encollée avec une résine thermodurcissable, en particulier de type résol, **caractérisé en ce qu**'il comprend une étape consistant à appliquer une composition d'un agent apte à réagir avec le formaldéhyde sur le produit isolant, après que la résine thermodurcissable a réticulé, ledit agent étant choisi parmi les composés à méthylène(s) actif(s) répondant aux formules aux formules (I) à (IV) suivantes :
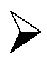 **FORMULE (I)** 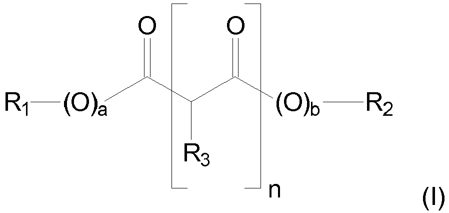 dans laquelle :
- R₁ et R₂, identiques ou différents, représentent un atome d'hydrogène, un radical alkyle en C₁-C₂₀, de préférence C₁-C₆, un radical amino ou un radical de formule 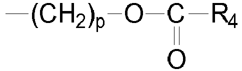 dans laquelle R₄ représente un radical 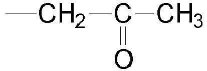 ou 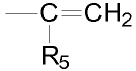 où R₅ = H ou -CH₃ et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2
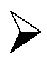 **FORMULE (II)**
R₆-CHR₇-C≡N (II)
dans laquelle
- R₆ représente un radical cyano ou un radical 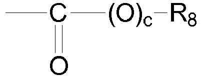 dans lequel :
- R₈ représente un atome d'hydrogène, un radical alkyle en C₁-C₂₀, de préférence C₁-C₆, ou un radical amino
- c est égal à 0 ou 1
- R₇ représente un atome d'hydrogène, un radical alkyle en C₁-C₁₀, un radical phényle ou un atome d'halogène.
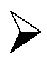 **FORMULE (III)** 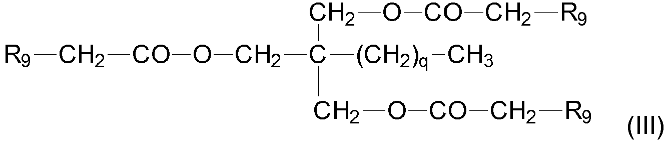 dans laquelle
- R₉ représente un radical -C≡N ou -CO-CH₃
- q est un nombre entier variant de 1 à 4.
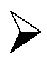 **FORMULE (IV)** 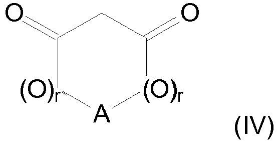 dans laquelle
- A représente un radical -(CH₂)₃- ou -C(CH₃)₂-
- r est égal à 0 ou 1

2. Procédé selon la revendication 1, **caractérisé en ce que** l'application de la composition d'agent apte à réagir avec le formaldéhyde est effectuée en continu sur le produit isolant.

3. Procédé selon la revendication 1 ou 2, **caractérisé en ce que** l'application de la composition contenant l'agent apte à réagir avec le formaldéhyde est effectuée juste à la sortie du dispositif de traitement thermique de type étuve alors que le produit d'isolation est encore chaud, notamment à une température de l'ordre de 50 à 80°C, de préférence 60 à 70°C.

4. Procédé selon l'une des revendications 1 à 3, **caractérisé en ce que** l'application de la composition d'agent apte à réagir avec le formaldéhyde est effectuée sur la face supérieure du produit d'isolation, et le cas échéant sur la face inférieure.

5. Procédé selon l'une des revendications 1 à 4, **caractérisé en ce que** l'application de la composition d'agent apte à réagir avec le formaldéhyde est effectuée par pulvérisation ou par enduction au rideau ou au rouleau.

6. Procédé selon l'une des revendications 4 ou 5, **caractérisé en ce que** l'application de la composition d'agent apte à réagir avec le formaldéhyde est effectuée par pulvérisation sur la face supérieure du produit d'isolation et par enduction au rouleau sur la face inférieure.

7. Procédé selon l'une des revendications 1 à 6, **caractérisé en ce que** le composé de formule (I) est la 2,4-pentanedione, la 2,4-hexanedione, la 3,5-heptanedione, la 2,4-octanedione, l'acétoacétamide, le N-monométhylacétoacétamide, le N-monoéthylacétoacétamide, le N,N-diméthyl-acétoacétamide, le N,N-diéthylacétoacétamide, l'acide acétoacétique, le méthylacétoacétate, l'éthylacétoacétate, le n-propylacétoacétate, l'iso-propylacétoacétate, l'iso-butylacétoacétate, le t-butylacétoacétate, le n-hexylacétoacétate, le malonamide, l'acide malonique, le diméthyl-malonate, le diéthylmalonate, le di-n-propylmalonate, le di-iso-propylmalonate, le di-n-butylmalonate , l'acide acétonedicarboxylique et le diméthylacétonedicarboxylate.

8. Procédé selon l'une des revendications 1 à 6, **caractérisé en ce que** le composé de formule (II) est le 2-méthylcyanoacétate, le 2-éthylcyanoacétate, le 2-n-propylcyanoacétate, le 2-iso-propylcyanoacétate, le 2-n-butylcyanoacétate, le 2-iso-butylcyanoacétate, le 2-ter-butylcyanoacétate, le 2-cyanoacétamide et le propanedinitrile.

9. Procédé selon l'une des revendications 1 à 6, **caractérisé en ce que** le composé de formule (III) est le triméthylolpropane triacétoacétate et le triméthylolpropane tricyanoacétate.

10. Procédé selon l'une des revendications 1 à 6, **caractérisé en ce que** le composé de formule (IV) est la 1,3-cyclohexanedione et l'acide de Meldrum.

11. Procédé selon l'une des revendications 1 à 10, **caractérisé en ce que** la résine thermodurcissable est un résol du type phénol-formaldéhyde ou phénol-formaldéhyde-amine.

12. Procédé selon l'une des revendications 1 à 11, **caractérisé en ce que** la composition d'agent apte à réagir avec le formaldéhyde est une solution, une dispersion ou une émulsion dans une phase liquide constituée à plus de 50 % en poids d'eau et d'un ou plusieurs co-solvants organiques dudit agent.

13. Procédé selon la revendication 13 **caractérisé en ce que** la phase liquide contient 75 à 90 % d'eau.

14. Procédé selon l'une des revendications 1 à 13, **caractérisé en ce que** l'agent apte à réagir avec le formaldéhyde est liquide **et en ce qu**'il est appliqué tel quel sur le produit d'isolation, sans adjonction d'eau et de co-solvants.

15. Dispositif pour la mise en oeuvre du procédé selon l'une des revendications 1 à 14, comportant une ligne de production de laine minérale, notamment par centrifugation interne, comprenant une pluralité d'organes de fibrage en série, au moins un organe de réception/convoyage des fibres issues des organes de fibrage, un ou des organes d'application d'une composition d'encollage et un ou des organes de traitement thermique du type étuve, **caractérisé en ce qu**'il comprend en outre au moins une rampe de pulvérisation d'une composition d'un agent apte à réagir avec le formaldéhyde sur la face supérieure du produit d'isolation aval de l'(des) organe(s) de traitement thermique, ladite au moins une rampe étant placée au dessus de la face supérieure dudit produit, **et en ce que** la première rampe de pulvérisation fait face à un dispositif assurant le séchage dudit produit, situé en dessous de la face inférieure dudit produit.

16. Dispositif selon la revendication 15, **caractérisé en ce que** la(les) rampe(s) comporte(nt) un conduit d'amenée muni de buses de pulvérisation réparties régulièrement sur la longueur de la(des) rampe(s) et aptes à produire des jets de liquide divergents, de préférence «plats».

17. Dispositif selon la revendication 15 ou 16, **caractérisé en ce qu**'il comprend en outre un ou plusieurs rouleaux d'enduction permettant l'application de la composition d'agent apte à réagir avec le formaldéhyde sur la face inférieure du produit d'isolation.

18. Dispositif selon la revendication 17, **caractérisé en ce que** le(les) rouleau(x) est(sont) disposé(s) en aval de l'(des) organe(s) de traitement thermique et du dispositif assurant le séchage dudit produit.

19. Produit d'isolation thermique et/ou acoustique obtenu par le procédé selon l'une des revendications 1 à 14 qui comporte en surface un agent apte à réagir avec le formaldéhyde choisi parmi les composés à méthylène(s) actif(s) de formules (I) à (IV) précitées.

20. Produit selon la revendication 19, **caractérisé en ce que** la quantité (en poids sec) d'agent apte à réagir avec le formaldéhyde varie de 0,01 à 50 g/m² de produit d'isolation final, de préférence de 0,1 à 10 g/m² et mieux encore de 0,2 à 5 g/m².

## Patentansprüche

1. Verfahren zur Herstellung eines Wärmedämm- und/oder Schalldämmproduktes auf Basis von Mineralwolle, welche mit einem wärmehärtbaren Harz, insbesondere vom Resoltyp gebunden ist, **dadurch gekennzeichnet, dass** es einen Schritt umfasst, bestehend aus dem Aufbringen einer Zusammensetzung eines Mittels, welches in der Lage ist, mit dem Formaldehyd auf dem Dämmprodukt zu reagieren, nachdem das wärmehärtbare Harz vernetzt ist, wobei das Mittel ausgewählt wird aus den Mischungen aus aktiven Methylen-Verbindungen, welche in den folgenden Formeln (I) bis (IV) wiedergegeben sind:
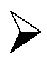 **FORMEL (I)** 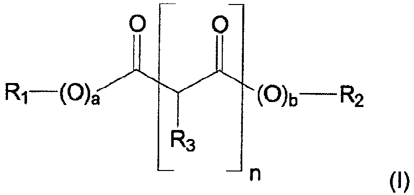 in welcher:
- R₁ und R₂ identisch oder unterschiedlich sind, ein Wasserstoffatom, einen Alkylrest von C₁-C₂₀, vorzugsweise C₁-C₆, einen Aminorest oder einen Rest gemäß der Formel 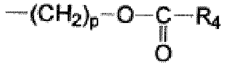 repräsentieren, in welcher R₄ einen Rest 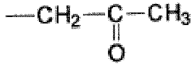 oder 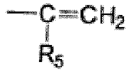 repräsentiert worin R₅ = H oder -CH₃ ist
und wobei p eine ganze Zahl variierend von 1 bis 6 ist.
- R₃ ein Wasserstoffatom, einen Alkylrest von C₁-C₁₀, einen Phenylrest oder ein Halogenatom repräsentiert
- a 0 oder 1 ist
- b 0 oder 1 ist
- n 1 oder 2 ist
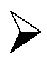 **FORMEL (II)**
R₆-CHR₇-C≡N (II)
in welcher
- R₆ ein Cyanrest oder einen Rest repräsentiert 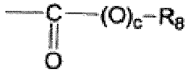 in welchem:
- R₈ ein Wasserstoffatom, einen Alykalrest von C₁-C₂₀, vorzugsweise C₁-C₆ oder einen Aminorest repräsentiert
- c 0 oder 1 ist
- R₇ ein Wasserstoffatom, einen Alkylrest von C₁-C₁₀, einen Phenylrest oder ein Halogenatom repräsentiert
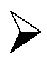 **FORMEL (III)** 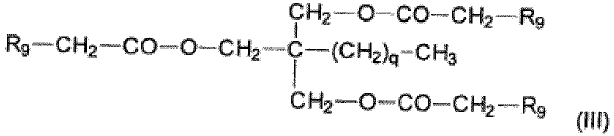 in welcher
- R₉ einen -CN-Rest oder -CO-CH₃ repräsentiert
- q eine ganze Zahl variiert von 1 bis 4 ist.
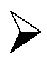 **FORMEL (IV)** 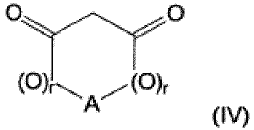 in welcher
- A einen -(CH₂)₃- oder -C(CH₃)₂-Rest repräsentiert
- r 0 oder 1 ist.

2. Verfahren nach Anspruch 1, **dadurch gekennzeichnet, dass** das Aufbringen der Zusammensetzung des Mittels, welches in der Lage ist, mit dem Formaldehyd zu reagieren, kontinuierlich auf dem Dämmprodukt durchgeführt wird.

3. Verfahren nach Anspruch 1 oder 2, **dadurch gekennzeichnet, dass** das Aufbringen der Zusammensetzung, welche das Mittel enthält, das in der Lage ist, mit dem Formaldehyd zu reagieren, direkt am Ausgang der Wärmebehandlungsvorrichtung vom Typ Trockenofen durchgeführt wird, während das Dämmprodukt noch warm ist, insbesondere bei einer Temperatur in der Größenordnung von 50 bis 80°C, vorzugsweise 60 bis 70°C.

4. Verfahren nach einem der Ansprüche 1 bis 3, **dadurch gekennzeichnet, dass** das Aufbringen der Zusammensetzung des Mittels, welches in der Lage ist, mit dem Formaldehyd zu reagieren, durchgeführt wird auf der Oberseite des Dämmproduktes und bei Bedarf auf der Unterseite.

5. Verfahren nach einem der Ansprüche 1 bis 4, **dadurch gekennzeichnet, dass** das Aufbringen der Zusammensetzung mit dem Mittel, welches in der Lage ist, mit dem Formaldehyd zu reagieren, durchgeführt wird durch Sprühen oder durch Vorhangbeschichtung oder durch Rollenauftrag.

6. Verfahren nach einem der Ansprüche 4 oder 5, **dadurch gekennzeichnet, dass** das Aufbringen der Zusammensetzung mit dem Mittel, welches in der Lage ist, mit dem Formaldehyd zu reagieren, durch Sprühen auf die Oberseite des Dämmproduktes und durch Rollenbeschichtung auf die Unterseite durchgeführt wird.

7. Verfahren nach einem der Ansprüche 1 bis 6, **dadurch gekennzeichnet, dass** die Zusammensetzung gemäß Formel (I) 2,4-Pentandion, 2,4-Hexandion, 3,5-Heptandion, 2,4-Oktandion, Acetonacetamid, N-Monomethylacetoacetamid, N-Monoethylacetoacetamid, N,N-Dimethylacetoacetamid, N,N-Diethylacetoacetamid, Acetessigsäure, Methylacetoacetat, Ethylacetoacetat, n-Propylacetoacetat, Isopropylacetoacetat, Isobutylacetoacetat, t-Butylacetoacetat, n-Hexylacetoacetat, Malonamid, Malonsäure, Dimethylmalonat, Diethylmalonat, Di-n-Propylmalonat, Diisopropylmalonat, Di-n-Butylmalonat, Acetondicarbonsäure und Dimethylacetondicarboxylat ist.

8. Verfahren nach einem der Ansprüche 1 bis 6, **dadurch gekennzeichnet, dass** die Zusammensetzung gemäß Formel (II) 2-Methylcyanacetat, 2-Ethylcyanacetat, 2-n-Propylcyanacetat, 2-Isopropylcyanacetat, 2-n-Butylcyanacetat, 2-Isobutylcyanacetat, 2-ter-Butylcyanacetat, 2-Cyanacetamid und Propandinitril ist.

9. Verfahren nach einem der Ansprüche 1 bis 6, **dadurch gekennzeichnet, dass** die Zusammensetzung gemäß Formel (III) Triymethylolpropantriacetoacetat und Trimethylopropantricyanacetat ist.

10. Verfahren nach einem der Ansprüche 1 bis 6, **dadurch gekennzeichnet, dass** die Zusammensetzung gemäß Formel (IV) 1,3-Cyclohexandion und Meldrumsäure ist.

11. Verfahren nach einem der Ansprüche 1 bis 10, **dadurch gekennzeichnet, dass** das wärmehärtbare Harz ein Resol vom Typ Phenol-Formaldehyd oder Phenol-Formaldehyd-Amin ist.

12. Verfahren nach einem der Ansprüche 1 bis 11, **dadurch gekennzeichnet, dass** die Zusammensetzung mit dem Mittel, welches in der Lage ist, mit dem Formaldehyd zu reagieren, eine Lösung, eine Dispersion oder eine Emulsion in einer flüssigen Phase ist, zusammengesetzt aus mehr als 50 Gew.-% Wasser und einem oder mehreren organischen Cosolvenzien für das Mittel.

13. Verfahren nach Anspruch 12, **dadurch gekennzeichnet, dass** die flüssige Phase 75 bis 90% Wasser enthält.

14. Verfahren nach einem der Ansprüche 1 bis 13, **dadurch gekennzeichnet, dass** das Mittel, welches in der Lage ist, mit dem Formaldehyd zu reagieren, flüssig ist und dass es als solches auf das Dämmprodukt aufgebracht wird, ohne Zugabe von Wasser und Cosolvenzien.

15. Vorrichtung zur Durchführung des Verfahrens gemäß einem der Ansprüche 1 bis 14, umfassend eine Linie zur Herstellung von Mineralwolle, insbesondere durch innere Zentrifugation (Centrifugation interne), umfassend eine Mehrzahl von Zerfaserungseinrichtungen in Reihe, wenigstens eine Einrichtung zur Aufnahme/Förderung der die Zerfaserungseinrichtungen verlassenden Fasern oder einer Aufbringeinrichtung für Bindemittelzusammensetzung oder einer Wärmebehandlungseinrichtung vom Typ Trockenofen, **dadurch gekennzeichnet, dass** sie unter anderem wenigstens eine Sprühanlage für eine Zusammensetzung aus einem Mittel aufweist, welches in der Lage ist, mit dem Formaldehyd auf der Oberseite des Dämmproduktes zu reagieren, welche dem oder den Einrichtungen zur Wärmebehandlung nachgeschaltet ist, wobei die wenigstens eine Anlage oberhalb der Oberseite des Produktes angeordnet ist und dass die erste Sprühanlage gegenüber einer Vorrichtung, welche die Trocknung des Produktes sicherstellt, unterhalb der Unterseite des Produktes angeordnet ist.

16. Vorrichtung nach Anspruch 15, **dadurch gekennzeichnet, dass** die Anlage(en) eine Zufuhrleitung aufweist, welche ausgestattet ist mit Sprühdüsen, welche regelmäßig über die Länge der Anlage(en) aufgeteilt sind und in der Lage sind, unterschiedliche Flüssigkeitsstrahlen zu produzieren, insbesondere "Platten".

17. Vorrichtung nach Anspruch 15 oder 16, **dadurch gekennzeichnet, dass** sie unter anderem eine oder mehrere Beschichtungsrollen aufweist, welche es erlauben, die Zusammensetzung des Mittels, welches in der Lage ist, mit dem Formaldehyd zu reagieren, auf die Unterseite des Dämmproduktes aufzubringen.

18. Vorrichtung nach Anspruch 17, **dadurch gekennzeichnet, dass** die Rolle(n) unterhalb der Wärmebehandlungseinrichtung(en) und der Vorrichtung, welche die Trocknung des Produktes sicherstellt, angeordnet ist (sind).

19. Wärme- und/oder Schalldämmprodukt, erhalten durch das Verfahren gemäß einem der Ansprüche 1 bis 14, welches auf seiner Oberfläche ein Mittel aufweist, welches in der Lage ist, mit dem Formaldehyd zu reagieren, ausgewählt aus den Mischungen aus aktiven Methylen-Verbindungen gemäß den vorgenannten Formeln (I) bis (IV).

20. Produkt nach Anspruch 19, **dadurch gekennzeichnet, dass** die Menge (bezogen auf das Trockengewicht) des Mittels, welches in der Lage ist, mit dem Formaldehyd zu reagieren, von 0,01 bis 50 g/m² des fertigen Dämmproduktes variiert, vorzugsweise von 0,1 bis 10 g/m² und besonders bevorzugt von 0,2 bis 5 g/m².

## Claims

1. Process for manufacturing a thermal and/or acoustic insulation product, based on mineral wool sized with a thermosetting resin, in particular of resol type, **characterized in that** it comprises a step that consists in applying a composition of an agent capable of reacting with formaldehyde to the insulating product, after the thermosetting resin has crosslinked, said agent being chosen from the compounds having active methylene(s) corresponding to the following formulae (I) to (IV):
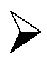 **FORMULA (I)** 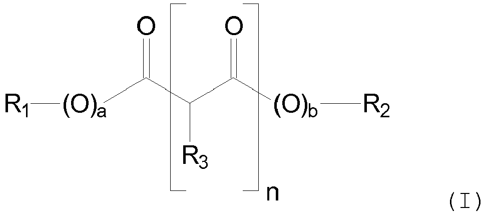 in which:
- R₁ and R₂, which are identical or different, represent a hydrogen atom, a C₁-C₂₀, preferably C₁-C₆, alkyl radical, an amino radical or a radical of formula 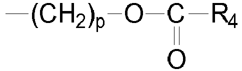 in which R₄ represents a 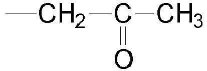 or 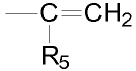 radical, where R₅ = H or -CH₃
and p is an integer that varies from 1 to 6;
- R₃ represents a hydrogen atom, a C₁-C₁₀ alkyl radical, a phenyl radical or a halogen atom;
- a is equal to 0 or 1;
- b is equal to 0 or 1; and
- n is equal to 1 or 2,
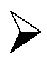 **FORMULA (II)**
R₆-CHR₇-C≡N (II)
in which:
- R₆ represents a cyano radical or a 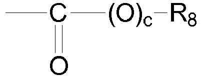 radical in which:
- R₈ represents a hydrogen atom, a C₁-C₂₀, preferably C₁-C₆, alkyl radical, or an amino radical;
- c is equal to 0 or 1; and
- R₇ represents a hydrogen atom, a C₁-C₁₀ alkyl radical, a phenyl radical or a halogen atom.
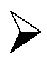 **FORMULA (III)** 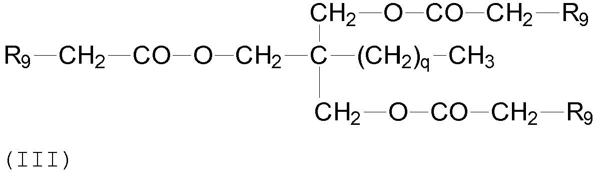 in which:
- R₉ represents a -C≡N or -CO-CH₃ radical; and
- q is an integer that varies from 1 to 4,
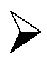 **FORMULA (IV)** 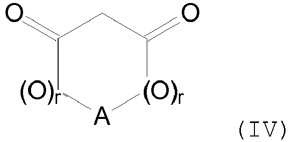 in which:
- A represents a -(CH₂)3- or -C(CH₃)₂- radical; and
- r is equal to 0 or 1.

2. Process according to Claim 1, **characterized in that** the composition of the agent capable of reacting with formaldehyde is applied continuously to the insulating product.

3. Process according to Claim 1 or 2, **characterized in that** the composition containing the agent capable of reacting with formaldehyde is applied just at the outlet of the heat-treatment device of the oven type whilst the insulation product is still hot; especially at a temperature of around 50 to 80°C, preferably 60 to 70°C.

4. Process according to one of Claims 1 to 3, **characterized in that** the composition of the agent capable of reacting with formaldehyde is applied to the upper face of the insulation product, and where appropriate to the lower face.

5. Process according to one of Claims 1 to 4, **characterized in that** the composition of the agent capable of reacting with formaldehyde is applied by spraying or by curtain coating or roll coating.

6. Process according to either of Claims 4 and 5, **characterized in that** the composition of the agent capable of reacting with formaldehyde is applied by spraying onto the upper face of the insulation product and by roll coating onto the lower face.

7. Process according to one of Claims 1 to 6, **characterized in that** the compound of formula (I) is 2,4-pentanedione, 2,4-hexanedione, 3,5-heptanedione, 2,4-octanedione, acetoacetamide, N-monomethyl-acetoacetamide, N-monoethylacetoacetamide, N,N-dimethylacetoacetamide, N,N-diethylacetoacetamide, acetoacetic acid, methyl acetoacetate, ethyl acetoacetate, n-propyl acetoacetate, isopropyl acetoacetate, isobutyl acetoacetate, t-butyl acetoacetate, n-hexyl acetoacetate, malonamide, malonic acid, dimethyl malonate, diethyl malonate, di-n-propyl malonate, diisopropyl malonate, di-n-butyl malonate, acetonedicarboxylic acid and dimethyl acetonedicarboxylate.

8. Process according to one of Claims 1 to 6, **characterized in that** the compound of formula (II) is 2-methyl cyanoacetate, 2-ethyl cyanoacetate, 2-n-propyl cyanoacetate, 2-isopropyl cyanoacetate, 2-n-butyl cyanoacetate, 2-isobutyl cyanoacetate, 2-tert-butyl cyanoacetate, 2-cyanoacetamide and propanedinitrile.

9. Process according to one of Claims 1 to 6, **characterized in that** the compound of formula (III) is trimethylolpropane triacetoacetate and trimethylolpropane tricyanoacetate.

10. Process according to one of Claims 1 to 6, **characterized in that** the compound of formula (IV) is 1,3-cyclohexanedione and Meldrum's acid.

11. Process according to one of Claims 1 to 10, **characterized in that** the thermosetting resin is a resol of the phenol-formaldehyde or phenol-formaldehyde-amine type.

12. Process according to one of Claims 1 to 11, **characterized in that** the composition of the agent capable of reacting with formaldehyde is a solution, a dispersion or an emulsion in a liquid phase composed of more than 50% by weight of water and of one or more organic cosolvents of said agent.

13. Process according to Claim 12, **characterized in that** the liquid phase contains 75 to 90% water.

14. Process according to one of Claims 1 to 13, **characterized in that** the agent capable of reacting with formaldehyde is liquid **and in that** it is applied as is to the insulation product, without addition of water and of cosolvents.

15. Device for carrying out the process according to one of Claims 1 to 14, comprising a line for producing mineral wool, especially by internal centrifugation, comprising a plurality of fiberizing members in series, at least one member for receiving/conveying the fibres resulting from the fiberizing members, one or more members for applying a sizing composition and one or more heat-treatment members of the oven type, **characterized in that** it also comprises at least one spray boom for spraying a composition of an agent capable of reacting with formaldehyde onto the upper face of the insulation product downstream of the heat-treatment member(s), said at least one boom being placed above the upper face of the insulation product, **and in that** the first spray boom is facing a device that ensures the drying of said product, located below the lower face of said product.

16. Device according to Claim 15, **characterized in that** the boom(s) comprise(s) a feed pipe provided with spray nozzles uniformly distributed over the length of the boom(s) and capable of producing jets of liquid that are divergent and preferably "flat".

17. The device according to Claim 15 or 16, **characterized in that** it also comprises one or more coating rolls that allow the application of the composition of the agent capable of reacting with formaldehyde to the lower face of the insulation product.

18. Device according to Claim 17, **characterized in that** the roll(s) is (are) positioned downstream of the heat-treatment member(s) and of the device ensuring the drying of said product.

19. Thermal and/or acoustic insulation product obtained by the process according to one of Claims 1 to 14, which comprises, at the surface, an agent capable of reacting with formaldehyde chosen from compounds having active methylene(s) of the abovementioned formulae (I) to (IV).

20. Product according to Claim 19, **characterized in that** the amount (by dry weight) of agent capable of reacting with formaldehyde varies from 0.01 to 50 g/m² of final insulation product, preferably from 0.1 to 10 g/m² and better still from 0.2 to 5 g/m².
